# EUROPEAN PATENT SPECIFICATION

(11) **EP 0 608 182 B1**
(45) Date of publication and mention of the grant of the patent: **29.04.1998**
(21) Application number: 94400124.7
(22) Date of filing: 20.01.1994
(51) Int. Cl.: H01F 19/04, H04M 15/28

(54) **NCU circuit and facsimile apparatus**
NCU-Schaltung und Faksimilegerät
Circuit NCU et appareil de facsimilé

(30) Priority: 20.01.1993 JP 7755/93
(43) Date of publication of application: 27.07.1994
(73) Proprietor: CANON KABUSHIKI KAISHA, Tokyo (JP)
(72) Inventor: Takeda, Tomoyuki, Ohta-ku, Tokyo (JP)
(74) Representative: Rinuy, Santarelli

(56) References cited:
- EP-A- 0 104 585
- EP-A- 0 373 921
- FR-A- 2 430 698
- PATENT ABSTRACTS OF JAPAN vol. 9, no. 169 (E-328)13 July 1985 & JP-A-60 042 918 (MATSUSHITA DENKI SANGYO KK) 7 March 1985
- PATENT ABSTRACTS OF JAPAN vol. 14, no. 102 (E-0894)23 February 1990 & JP-A-13 003 856 (SHARP CORPORATION) 7 December 1989
- PATENT ABSTRACTS OF JAPAN vol. 16, no. 14 (E-1154)14 January 1992 & JP-A-32 034 006 (TAMURA SEISAKUSHO CO LTD) 18 October 1991

## Description

### BACKGROUND OF THE INVENTION

### Field of the Invention

The present invention relates to a facsimile apparatus, and more particularly to an NCU circuit therefor.

### Related Background Art

In a facsimile apparatus for Europe, various devices have been adopted in an NCU circuit to meet the PTT standards of the European countries. For example, for Germany and Switzerland, a fare charge filter is additionally provided in order to prevent the facsimile apparatus from malfunctioning by a fare charge pulse (or metering pulse) sent through a telephone line. The fare charge filter comprises an LC filter. A frequency of the fare charge pulse is 16 KHz for Germany and 12 KHz for Switzerland, and constants of the LC filter are of sixth order because the fare charge filter requires the attenuation of more than 40 dB at the respective frequencies.

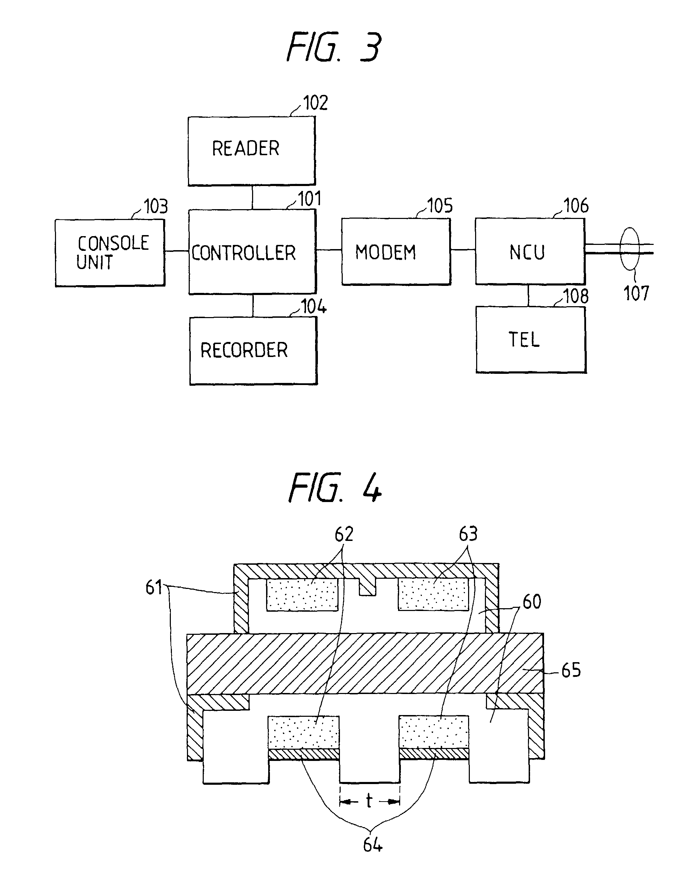

Referring to Fig. 3, a facsimile apparatus with a telephone set is explained. Numeral 101 denotes a control unit for controlling an overall facsimile apparatus. The control unit controls relays, discriminates a CNG signal and discriminates a Ci signal. Numeral 102 denotes a reader for reading an image. Numeral 103 denotes a console unit including a display and keys. Numeral 104 denotes a recorder for recording the image. Numeral 105 denotes a modem. Numeral 106 denotes an NCU which permits the connection of a handset 108 and a daughter (or subsidiary) telephone set such as an automatic responding and recording telephone set. Numeral 107 denotes a telephone line. Numeral 108 denotes a handset attached to the facsimile apparatus. The handset 108 and a daughter telephone set are connected to the telephone line 107 with a predetermined priority.

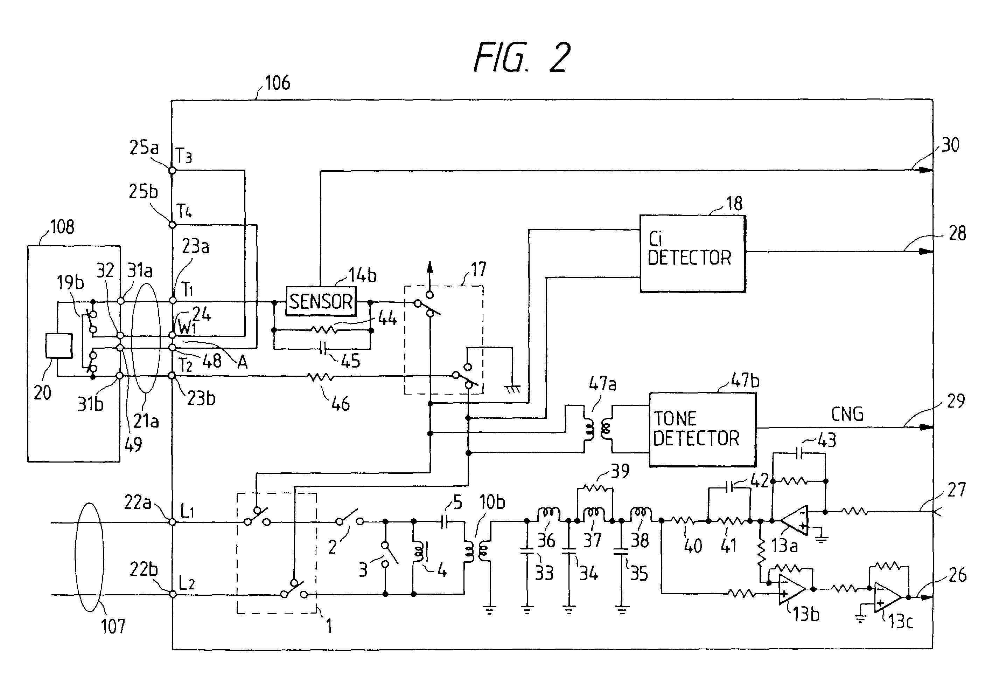

A prior art NCU is explained with reference to Fig. 2. Numeral 1 denotes a CML relay for switching the telephone line 107 between the facsimile apparatus and the handset 108 or the daughter telephone set. Numeral 2 denotes a P relay for generating a dialing pulse and numeral 3 denotes an S relay which is closed while the dialing pulse is generated to reduce an affect by the on/off transition of the P relay. Numeral 4 denotes a RET coil for forming a DC loop. Numeral 5 denotes a DC blocking capacitor. Numeral 10b denotes a transformer which usually has primary and secondary impedances of 600 Ω. Numerals 33 - 39 denote coils, capacitors and resistors which form a fare charge filter for eliminating a fare charge pulse (or metering pulse). Numerals 40, 41 and 42 denote resistors and a capacitor of a terminating impedance. Numeral 43 denotes a capacitor for compensating a frequency characteristic by the fare charge filter.

Numeral 14b denotes a current sensor which detects a magnetic field generated by a current flowing through a coil by using a Hall element.

An insertion loss is created by the insertion of the current sensor 14b in a signal line T1 and the impedance balance with a signal line T2 is destroeyd. The Europe defines a standard for the impedance balance, and in Sweden who defines a particularly server standard for the countermeausre, a resistor 44 and a capacitor 44 are inserted in parallel to a current sensor 41b and a resistor 46 of several Ω is inserted even in the line T2 to which no current sensor is inserted.

Numerals 44 and 45 denote a bypass circuit for suppressing the impedance balance and the insertion loss within the standard, and numeral 46 denotes a resistor inserted in the line having no sensor inserted therein for the same purpose. In the prior art, the resistors 44 and 46 are 8.2 Ω and the capacitor 45 is 100 µF.

Numeral 17 denotes an H relay for supplying a voltage to the handset 108 or the daughter telephone set when the relay 1 is switched to the facsimile apparatus. By switching the H relay to the power supply as soon as a Ci signal is received, the facsimile reception may be attained without ringing the handset or the daughter telephone set. Numeral 18 denotes a Ci detector for detecting the Ci signal.

As will be explained later, in order to automatically switch the telephone set and the facsimile apparatus while permitting the connection of the daughter telephone set to the facsimile apparatus and the connection of the automatic recording and responding telephone set thereto, it is necessary to detect a CNG signal (1100 Hz) sent from a transmitting facsimile apparatus. In the prior art apparatus, the CNG signal is detected by a tone detector 47b through the transformer 47a.

Numerals 47a and 47b denote CNG detector circuit. It separates a signal sent from the telephone line from the line by the transformer 47a and the CNG signal is detected by the tone detector 47b.

Numeral 26 denotes a receiving signal line of the facsimile apparatus, numeral 27 denotes a transmitting signal line of the facsimile apparatus and numeral 28 denotes a signal line which is rendered low when the Ci signal is received. Numeral 29 denotes an output of the tone detector 47b by which the CNG signal is detected. Numeral 30 denotes a digital output which is rendered low when a current flowing through the current sensor 14a is higher than a threshold (which is between 5 mA and 10 mA in an embodiment) and by which the off-hook of the handset 108 or the daughter telephone set is detected.

Numeral 22a and 22b denote L1 and L2 of the line, respectively. Numerals 23a and 23b denote T1 and T2 connected to the handset. When a CML relay is switched to the telephone set, L1 and L2 are connected to T1 and T2, respectively. Numerals 24 and 48 denote return lines from the handset. Numerals 25a and 25b denote T3 and T4 connected to the daughter telephone set. T3 is connected to a return line W1 form the handset and T4 is connected to a return line A from the handset.

The handset is now explained. Numeral 19b denotes a hook switch which connects and disconnects T1 and W1, and T2 and W2, respectively. When the handset is hooked on, the switch is closed and T1 and W1, and T2 and A are connected, respectively. When the handset if hooked off, the switch is opened and T1 and W1, and T2 and A are disconnected, respectively, so that the daughter telephone set is disconnected from the telephone line. In this manner, a predetermined priority is assigned to the handset and the daughter telephone set to prevent the parallel connection. Numeral 20 denotes a telephone line.

A two-pole hook switch 19b attached to the facsimile apparatus is used to cut the return lines from the handset in dual lines.

Numerals 32 and 49 denote terminals which are connected to W1 and A of the NCU.

The handset and the NCU of the facsimile apparatus are connected by a curled cord 21b. Since the curled cord includes a resistance, it is necessary to provide a two-pole switch and a signal line 49-48 which is of the same length as a signal line 32-24 in order to set an impedance balance within the standard.

In the prior art apparatus, however, since the order of the fare charge filter is high, the number of coils and capacitors of the filter increases. As a result, a cost is increased and a packaging space is increased. Further, because of the inclusion of the fare charge filter, a transmission or reception frequency characteristic is not flat. Accordingly, a capacitor 43 for compensating the frequency characteristic is required.

EP-A-373 921 relates to a facsimile apparatus also having an NCU circuit and means for switching a telephone line between the facsimile apparatus and a telephone unit. This apparatus does however not include a filter which can obviate the above-mentioned drawbacks.

EP-A-104 585 discloses a transformer having a gap between two windings. No application of this transformer to an NCU circuit is disclosed in this document.

### SUMMARY OF THE INVENTION

It is an object of the present invention to improve a facsimile apparatus having a fare charge filter.

It is another object of the present invention to provide a facsimile apparatus which uses a fare charge filter which uses a leakage inductance as one of coils.

Other objects of the present invention will be apparent from the following detailed description of the preferred embodiments and the drawings.

### BRIEF DESCRIPTION OF THE DRAWINGS

Fig. 1 shows a block diagram of an NCU of a facsimile apparatus with a telephone set of an embodiment of the present invention;
Fig. 2 shows a block diagram of an NCU of a prior art facsimile apparatus with a telephone set;
Fig. 3 shows an overall block diagram of the facsimile apparatus with the telephone set of the embodiment;
Fig. 4 shows a structure of a noise blocking transformer used in the NCU of the embodiment;
Fig. 5 shows a frequency characteristic of receiver attenuation in the embodiment;
Fig. 6 shows a block diagram of a current sensor used in the NCU of the embodiment, and
Fig. 7 shows a block diagram of a current sensor used in the NCU of the prior art apparatus.

### DETAILED DESCRIPTION OF THE PREFERRED EMBODIMENTS

An embodiment of the present invention is now explained with reference to the drawings.

A block diagram of a facsimile apparatus with a telephone set of the present embodiment is identical to that of the prior art apparatus shown in Fig. 3.

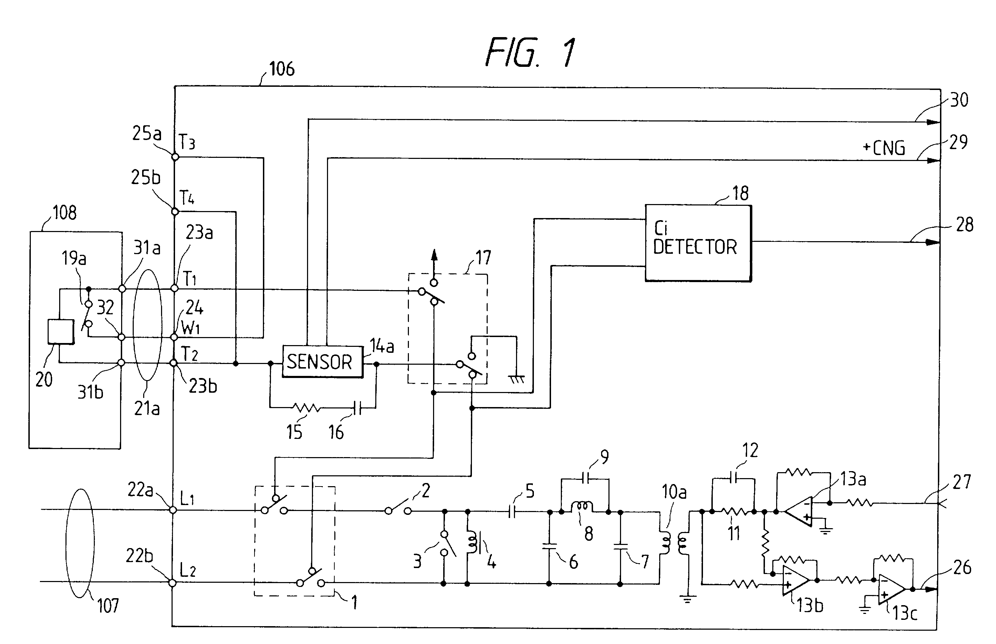

An NCU of the present embodiment is explained with reference to Fig. 1. Numeral 1 denotes a CML relay which switches a telephone line 107 between the facsimile apparatus and a handset 108 or a daughter telephone set. Numeral 2 denotes a P relay for generating a dialing pulse, and numeral 3 denotes an S relay which is closed while the dialing pulse is generated to reduce an affect of an on/off transition of the P relay. Numeral 4 denotes an RET coil which forms a DC loop. Numeral 5 denotes a DC blocking capacitor. Numerals 6 to 9 form a fare charge filter together with a noise blocking transformer 10a. Numerals 6, 7 and 9 denote capacitors and numeral 8 denotes a choke coil. In the present embodiment, the capacitor 6 is 0.033 µF, the capacitor 7 is 0.056 µF, the coil 8 is 15 mH and the capacitor 9 is 6800 pF. A peak of the attenuation is set to 16 KHz to comply with the frequency of the fare charge pulse (16 KHz), and it is primarily determined by 8 and 9. Since the inductance of the coil 8 is determined to comply with a leakage inductance of the noise blocking transformer, the peak of the attenuation is actually adjusted by changing the capacitance of the capacitor 9. For example, in the NCU for Switzerland, the capacitor 9 is 12000 pF to comply with the frequency of the fare charge pulse (12 KHz).

Numeral 10a denotes a noise blocking transformer. A construction of the transformer will be described later with reference to Fig. 4. Primary and secondary impedances of the transformer are 1200 Ω. Numerals 11 and 12 a resistor and a capacitor of a terminating impedance which determines a return loss of the NCU. In the present embodiment, the resistor 11 is 820 Ω and the capacitor 12 is 0.022 µF. Numerals 13a, 13b and 13c denote operational amplifiers which form a 2-4 wire conversion circuit.

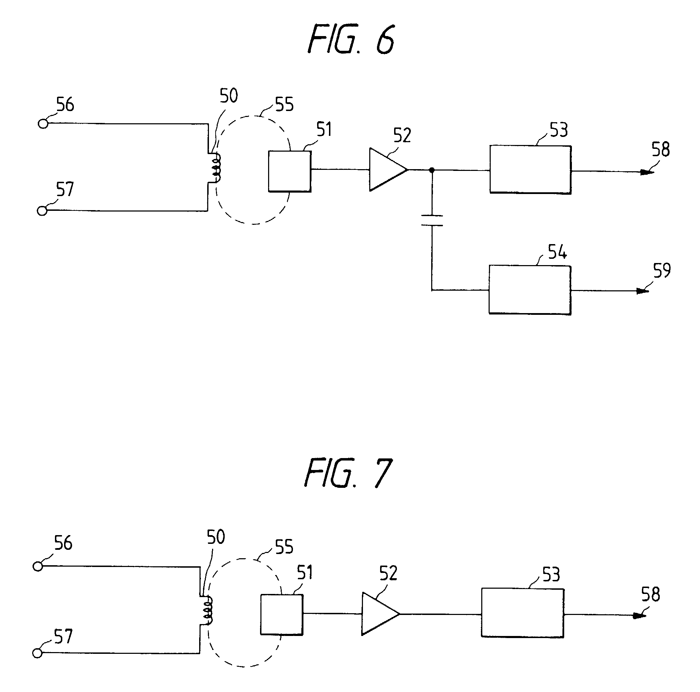

Numeral 14a denotes a current sensor with an analog signal output. The current sensor detects a magnetic field generated by a current flowing through the coil by using a Hall element and a detail thereof will be explained later with reference to Fig. 6. Numerals 15 and 16 denote a bypass circuit for bringing the impedance balance and the insertion loss within the standard. In the present embodiment, the resistor 15 is 5.6 Ω and the capacitor 16 is 33 µF. A resistance of the coil of the current sensor 10a is approximately 4.3 Ω and an inductance thereof is approximately 1.38 mH. In the present embodiment, the impedance balance is higher than 60 dB (German standard 52 dB or higher) in 300 Hz - 3.4 KHz, and the insertion loss is lower than 0.3 dB (German standard 0.5 dB or lower) when measured with input and output impedances of 200 Ω at 16 KHz.

Numeral 17 denotes an H relay for supplying a voltage to the handset 108 and the daughter telephone set when the CML relay is switched to the facsimile apparatus. By switching the H relay to the power supply as soon as the Ci signal is received, the facsimile reception may be attained without ringing the handset and the daughter telephone set. Numeral 18 denotes a Ci detector for detecting the Ci signal.

Numeral 26 denotes a receiving signal line, numeral 27 denotes a transmitting signal line and numeral 28 denotes a signal line which is rendered low when the Ci signal is received. Numeral 29 denotes an analog output signal line of a current flowing through the current sensor 14a. The CNG signal is detected by a signal on this signal line. In the prior art apparatus, since the capacitance of the capacitor 45 of Fig. 2 is large, little current flows through the coil of the current sensor when the frequency rises. In the prior art apparatus, this does not bring an actual damage because the current sensor 14b has no analog output. However, if the current sensor having the analog output 14a is used in the prior art apparatus, it will be difficult to detect the CNG signal of even -30 dBm in the audio frequency band because a sufficient S/N ratio is not assured. Accordingly, it is necessary to provide a tone detector for the CNG detection.

In the present embodiment, the CNG signal of 0 to -49 dBm can be detected. Numeral 30 denotes a digital output which is rendered low when the current flowing through the current sensor 14a is higher than a threshold (between 5 mA and 10 mA in the present embodiment) and the off-hook of the handset 108 and the daughter telephone set is detected by this signal.

Numerals 22a and 22b denote L1 and L2 of the line. Numerals 23a and 23b denote T1 and T2 connected to the handset, respectively. When the CML relay is switched to the telephone set, L1 and T1, and L2 and T2 are connected, respectively. Numeral 24 denotes a return line from the handset. Numerals 25a and 25b denote T3 and T4 connected to the daughter telephone set. T3 is connected to a return line W1 from the handset and T4 is connected to T2.

The handset is now explained. Numeral 19a denotes a hook switch for connecting and disconnecting T1 and W1. When the handset is hooked on, the switch is closed and T1 and W1 are connected. When the handset is hooked off, the switch is opened and T1 and W1 are disconnected so that the daughter telephone set is disconnected from the telephone line. In this manner, a predetermined priority is assigned to the handset and the daughter telephone set to prevent parallel connection. Numeral 20 denotes a telephone line.

Terminals 31a and 31b are connected to T1 and T2 of the NCU, respectively, and a terminal 32 is connected to W1.

The handset and the NCU of the facsimile apparatus are connected through a curled cord 21a. The curled cord includes a resistance and a resistance between 23a and 24 is approximately 4Ω when the hook switch 19a of the handset is closed. In the present embodiment, a return line from the handset is provided only on one line and the other line T4 is directly connected by a circuit board of the NCU. The impedances of T3 and T4 are unbalanced and the current sensor having the resistance is connected to the line having no return line so that the impedances are balanced as a whole.

Fig. 4 shows a construction of the noise blocking transformer used in the NCU of the present embodiment. Numeral 60 denotes a bobbin, numeral 61 denotes a protection cover, numeral 62 denotes a primary coil, numeral 63 denotes a secondary coil, numeral 64 denotes an insulative tape and numeral 65 denotes a core. The primary coil 62 and the secondary coil 63 are wound coaxially and parallelly along the core 65. An insulative breakdown voltage between the primary coil and the secondary coil is assured by a gap t between the coils. In the present embodiment, t = 3.2 mm to comply with the IEC 950 standard. A primary leakage inductance Lp and a secondary leakage inductance Ls are determined by the gap t. In the present embodiment, the transformer can establish a high attenuation frequency band by using the leakage inductance.

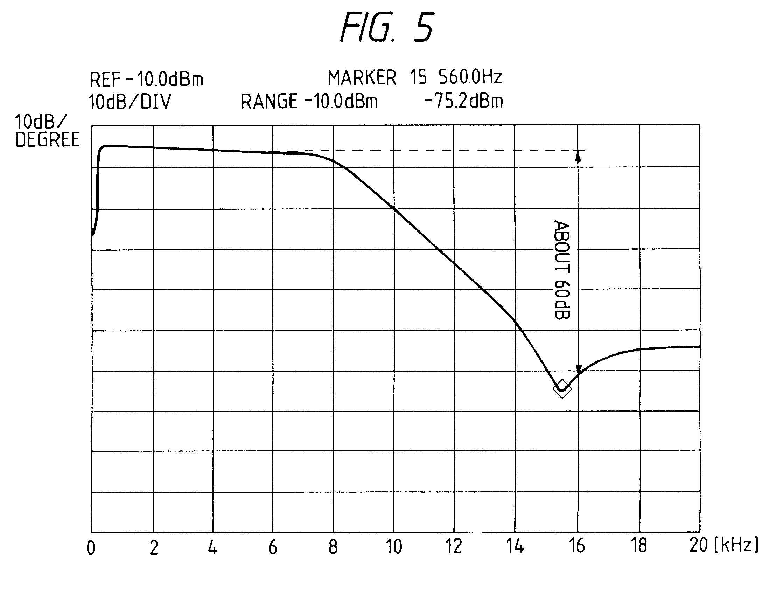

Fig. 5 shows a level of the receiving signal line 26 when signals are received from T1 and T2. As seen from Fig. 5, the attenuation at 16 KHz which corresponds to the Germany fare charge pulse frequency is approximately 60 dB. This is sufficient attenuation to eliminate the affect of the fare charge pulse, and there is no affect of the fare charge pulse to an image in the present embodiment.

Fig. 6 shows a block diagram of the current sensor 14a with the analog output of the present embodiment. It generates a magnetic field 55 in accordance with a current flowing from 56 connected to the primary circuit of the line to 57. An inductance of the coil is approximately 1.38 mH and a resistance is approximately 4.3 Ω. Numeral 51 denotes a Hall element which generates a voltage in accordance with the magnetic field 55 generated by the coil. Numeral 52 denotes a buffer amplifier. Numeral 53 denotes a comparator. Numeral 158 denotes an output signal from the comparator and it is low when the current is higher than a predetermined level (5 - 10 mA in the present embodiment) and high when the current is lower than the predetermined level. Numeral 54 denotes an amplifier including a band-pass filter for amplifying the analog signal from 52.

A block diagram of the prior art current sensor shown in Fig. 2 is shown for comparison purpose.

Fig. 7 shows a block diagram of the prior art current sensor 14b. It does not include the analog output unlike Fig. 6.

The present embodiment differs from the prior art in the following points:
(1) The number of coils and capacitors of the fare charge filter is smaller.
(2) No capacitor 43 for adjusting the frequency is included.

The present invention uses a noise blocking transformer having a core, a plurality of a windings coaxially and parallelly arranged along the core to magnetically couple to each other, and means for holding and securing the core and the winding with a predetermined gap therebetween to maintain a predetermined leakage inductance; and a filter circuit having coils and capacitors and using the leakage inductance of said transformer as one of said coils. Accordingly, the number of coils and capacitors required to form the fare charge filter is reduced and a sufficient attenuation to prevent the affect by the fare charge pulse is assured. As a result, the packaging area of the NCU is reduced and the cost is reduced.

## Claims

1. An NCU circuit comprising:
a filter circuit (6-9, 10a) having a predetermined number of coils and capacitors; and
means (1) for switching a telephone line between a facsimile apparatus and a telephone set,
characterized by further comprising,
a transformer (10a) having a core (65), a plurality of windings (62, 63) coaxially and parallelly arranged along the core to magnetically couple to each other;
means (11, 12) for terminating one end of said transformer by a predetermined impedance; and
means (60) for holding and securing the core and the windings with a predetermined gap (t) therebetween to maintain a predetermined leakage inductance,
wherein the leakage inductance of said transformer is used as one of said coils.

2. A facsimile apparatus comprising an NCU circuit as defined in claim 1 and transmission and reception means (101-105) for transmitting and receiving an image,
wherein said switching means of the NCU circuit switches a telephone line between the facsimile apparatus and a telephone set.

## Patentansprüche

1. NCU-Schaltung mit
einer Filterschaltung (6-9, 10a) mit einer vorbestimmten Anzahl von Spulen und Kapazitäten und
einer Einrichtung (1) zur Umschalten einer Telephonleitung zwischen einem Faksimilegerät und einem Telephongerät,
**gekennzeichnet durch**
einen Transformator (10a) mit einem Kern (65), einer Vielzahl von Wicklungen (62, 63), die zur magnetischen Kopplung miteinander koaxial und parallel entlang des Kerns angeordnet sind,
eine Einrichtung (11, 12) zum Abschluß eines Endes des Transformators mit einer vorbestimmten Impedanz und
eine Einrichtung (60) zum Halten und Befestigen des Kerns und der Wicklungen mit einem vorbestimmten Abstand (t) dazwischen zum Erhalt einer vorbestimmten Streuinduktivität, wobei die Streuinduktivität des Transformators als eine der Spulen verwendet wird.

2. Faksimilegerät mit einer NCU-Schaltung nach Anspruch 1 und Sende- sowie Empfangseinrichtungen (101 bis 105) zum Senden und Empfangen eines Bilds, wobei die Schalteinrichtung der NCU-Schaltung eine Telephonleitung zwischen dem Faksimilegerät und einem Telephongerät umschaltet.

## Revendications

1. Circuit NCU comprenant:
un circuit de filtrage (6-9, 10a) ayant un nombre prédéterminé de bobines et de condensateurs; et
un moyen de commutation (1) pour commuter une ligne téléphonique entre un appareil télécopieur et un poste téléphonique,
caractérisé en ce qu'il comprend en outre
un transformateur (10a) ayant un noyau (65), une pluralité d'enroulements (62, 63) montés coaxialement et parallèlement le long du noyau afin qu'ils soient couplés magnétiquement entre eux;
des moyens (11, 12) pour terminer une extrémité dudit transformateur par une impédance prédéterminée; et
un moyen (60) pour tenir et fixer le noyau et les enroulements avec un intervalle prédéterminé (t) entre eux de manière à maintenir une inductance de fuite prédéterminée,
dans lequel l'inductance de fuite dudit transformateur est utilisée comme étant une desdites bobines.

2. Appareil télécopieur comprenant un circuit NCU selon la revendication 1, et des moyens de transmission et de réception (101, 105) pour transmettre et recevoir une image,
dans lequel ledit moyen de commutation du circuit NCU commute une ligne téléphonique entre l'appareil télécopieur et un poste téléphonique.
